# EUROPEAN PATENT SPECIFICATION

(11) **EP 1 380 222 B1**
(45) Date of publication and mention of the grant of the patent: **13.09.2006**
(21) Application number: 03003345.0
(22) Date of filing: 13.02.2003
(51) Int. Cl.: A44B 19/26, B29C 65/00

(54) **Slider for slide fastener**
Schieber für Reissverschluss
Curseur pour fermeture à glissière

(30) Priority: 15.02.2002 JP 2002037752
(43) Date of publication of application: 14.01.2004
(73) Proprietor: YKK Corporation, Chiyoda-ku Tokyo (JP)
(72) Inventor: Tenjin, Tsukasa, Kurobe-shi, Toyama (JP)
(74) Representative: Casalonga, Axel

(56) References cited:
- FR-A- 1 367 404
- US-A- 3 991 447
- US-A- 4 048 699
- US-A- 4 618 516

## Description

### Background of the Invention

### Field of the Invention

The present invention relates to a slider in a slider fastener, and more particularly to a bonding mechanism of a body and a cover for attaching a pull tab which can be used in a slider having an automatic or semiautomatic stopper in which an attachment column is provided on the upper surface of a slider body as well as a free slider.

### Description of the Related Art

A slider for a slide fastener which has conventionally been known includes a slider having an automatic stopper in which an attachment column provided on the upper surface of a slider body is covered with a cover for pull tab attachment and a free slider in which a cover for attaching a pull tab is directly fixed to the upper surface of a body. As shown in Fig. 14, the slider 101 has been disclosed in JP-A-51-12243 in which a fitting groove 111 capable of fitting the lower end portions 121 of both side walls 119 of a cover 104 is provided on the upper surface of a slider body 102. The lower end portions 121 of both side walls 119 of the cover 104 are fitted in the fitting groove 111 and the lower end portions 121 of the cover 104, and the body 102 are then welded integrally in the fitting groove 111 by ultrasonic processing. The slider 101 also includes an attachment column 110 and a pivot 122.

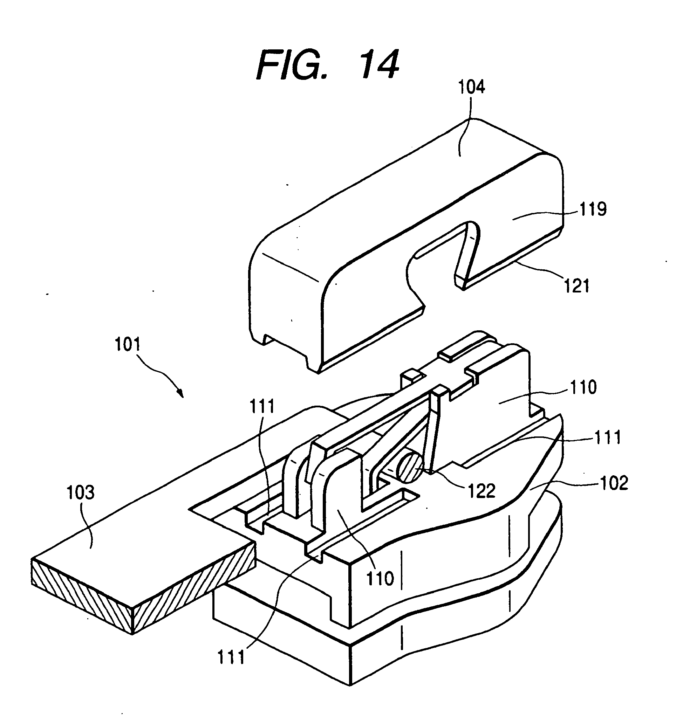

In the slider 101 for a slide fastener shown in Fig. 14 which has been described above, the lower end portions 121 of both side walls 119 of the cover 104 for pull tab attachment are fitted in the fitting grooves 111 provided on the upper surface of the body 102 in parallel, and the lower end portions 121 of the cover 104 and the body 102 are welded integrally in the fitting grooves 111 by the ultrasonic processing. Accordingly, the surface of the lower end portion 121 of the cover 104 and the whole bottom face of the fitting grooves 111 are welded in a contact state. Therefore, the surface of the lower end portion 121 of the cover 104 and the whole bottom face of the fitting groove 111 are fused. For this reason, the amount of fusion of the cover 104 and the body 102 is large to generate a situation in which a fused material overflows from the fitting groove 111 to the surface of the body 102.

The fused material overflowing from the fitting groove 111 is stuck to all of the upper, front and rear surfaces of the body 102 and the side, front and rear surfaces of the cover 104 and is thus solidified so that the beauty of the slider 101 is spoiled. Moreover, a lump of the fused material stuck to the upper surface of the body 102 and the side surface of the cover 104 comes in contact with a pull tab 103 when the pull tab 103 is to fall down toward the upper surface of the body 102. Therefore, it is hard to cause the pull tab 103 to completely fall down toward the upper surface of the body 102. Accordingly, it is necessary to carry out a work for removing the lump of the fused material which is stuck. Thus, there is a problem in that the production efficiency of the slider 101 is deteriorated.

### Summary of the Invention

The invention has been made in consideration of the above-mentioned problem. As a main object, a first aspect of the invention is directed to a slider which is provided with a welding projection protruded from a part in a groove formed on the lower end of a cover for pull tab attachment or the surface of a body, has such a configuration that a fused material can be prevented from being fused excessively and overflowing to the surface of the body to stick a lump even if the body and the cover are welded by ultrasonic processing, and does not spoil the beauty of the slider but makes a good appearance, and furthermore, a slider for a slide fastener which firmly fixes a cover for pull tab attachment.

In addition to the object of the first aspect of the invention, a preferred second aspect of the invention is directed to the slider for a slide fastener, wherein the welding projection is provided at a predetermined interval in the groove formed on the lower end of the cover for pull tab attachment or the surface of the body, and the fused material can be spread toward a spacing between the projections in the groove and can be prevented from flowing out of the groove.

In addition to the object of the first aspect of the invention, a preferred third aspect of the invention is directed to the slider for a slide fastener, wherein the welding projection to be provided in the groove formed on the lower end of the cover for pull tab attachment or the surface of the body takes such a shape as to generate a gap on left and right during fitting, and the fused material can be spread toward a spacing between the projections in the groove and can be prevented from flowing out of the groove.

In addition to the object of the first, second or third aspect of the invention, a preferred fourth aspect of the invention is directed to the slider for a slide fastener, wherein it is possible to carry out efficient welding, and furthermore, to maintain a great strength by specifying a place in which the welding projection is to be provided in the groove formed on the lower end of the cover for pull tab attachment or the surface of the body.

In addition to the object of the first, second or third aspect of the invention, a preferred fifth aspect of the invention is directed to the slider for a slide fastener, wherein the welding projection to be provided in the groove formed on the lower end of the cover for pull tab attachment or the surface of the body takes a square cross section to increase an amount of fusion, and the projection suitable for a large-sized slider requiring a great fusion strength is thus formed.

In addition to the object of the first, second or third aspect of the invention, a preferred siixth aspect of the invention is directed to the slider for a slide fastener, wherein the welding projection to be provided in the groove formed on the lower end of the cover for pull tab attachment or the surface of the body takes a triangular cross section to reduce an amount of fusion,' and the projection suitable for a small-sized slider which does not require a great fusion strength is thus formed.

In order to attain the objects, the first aspect of the invention is mainly directed to a slider for a slide fastener having a body of a slider and a cover for pull tab attachment which is provided on an upper surface of the body, wherein a concave fitting groove for accommodating a lower end face of the cover is provided on the upper surface of the body, a welding projection is protruded outward in a part of a surface of the lower end face of the cover or a bottom face of the fitting groove of the body, and the body of the slider formed of a resin and the cover for pull tab attachment are welded integrally by ultrasonic processing or the like.

In addition to the structure according to the first aspect of the invention, the preferred second aspect of the invention is directed to the slider for a slide fastener, wherein a plurality of welding projections to be provided in a part of the surface of the lower end face of the cover or the bottom face of the fitting groove of the body is formed to be protruded at a predetermined interval therebetween.

In addition to the structure according to the first aspect of the invention, the preferred third aspect of the invention is directed to the slider for a slide fastener, wherein the welding projection to be provided in a part of the surface of the lower end face of the cover or the bottom face of the fitting groove of the body is formed to generate a constant gap portion on left and right sides of a continuous projection.

In addition to the structure according to the first, second or third aspect of the invention, the preferred fourth aspect of the invention is directed to the slider for a slide fastener, wherein the welding projection to be provided in a part of the surface of the lower end face of the cover or the bottom face of the fitting groove of the body is formed on the lower end face of a side wall on both sides of the cover or the bottom face of the fitting groove of the body which is opposed to the lower end face of the side wall of the cover.

In addition to the structure according to the first, second or third aspect of the invention, the preferred fifth aspect of the invention is directed to the slider for a slide fastener, wherein the welding projection to be provided on the surface of the lower end face of the cover or the bottom face of the fitting groove of the body is formed such that the shape of a protruded portion such as a rectangular parallelepiped or a truncated cone with a predetermined interval, or a continuous projection takes a square cross section.

In addition to the structure according to the first, second or third aspect of the invention, the preferred sixth aspect of the invention is directed to the slider for a slide fastener, wherein the welding projection to be provided on the surface of the lower end face of the cover or the bottom face of the fitting groove of the body is formed such that the shape of a protruded portion such as a pyramid, a hipped member or a cone with a predetermined interval, or a continuous projection takes a triangular cross section.

### Brief Description of the Drawings

Fig. 1 is a side view showing a slider for a slide fastener.
Fig. 2 is a front view showing the slider.
Fig. 3 is a plan view showing the body of the slider.
Fig. 4 is an enlarged side view showing the cover of the slider.
Fig. 5 is an enlarged bottom view showing the cover of the slider.
Fig. 6 is an exploded front view showing a state of the slider in which welding has not been carried out.
Fig. 7 is a partial enlarged view showing a state in which the body abuts on the cover before the welding of the slider.
Fig. 8(a), 8(b) and 8(c) are explanatory views showing the welding protrusion of a pyramid.
Fig. 9(a), 9(b) and 9(c) are explanatory views showing the welding protrusion of a hipped member.
Fig. 10(a), 10(b) and 10(c) are explanatory views showing the welding projection of a cone.
Fig. 11(a), 11(b) and 11(c) are explanatory views showing the welding projection of a truncated cone.
Fig. 12 is an explanatory view showing the welding projection of a protruded portion.
Fig. 13 is a plan view showing a body provided with the welding projection.
Fig. 14 is an exploded perspective view showing a well-known slider, a part of which is taken away.

### Detailed Description of illustrative Embodiments

An embodiment of a slider for a slide fastener according to the invention will be specifically described below with reference to the drawings.

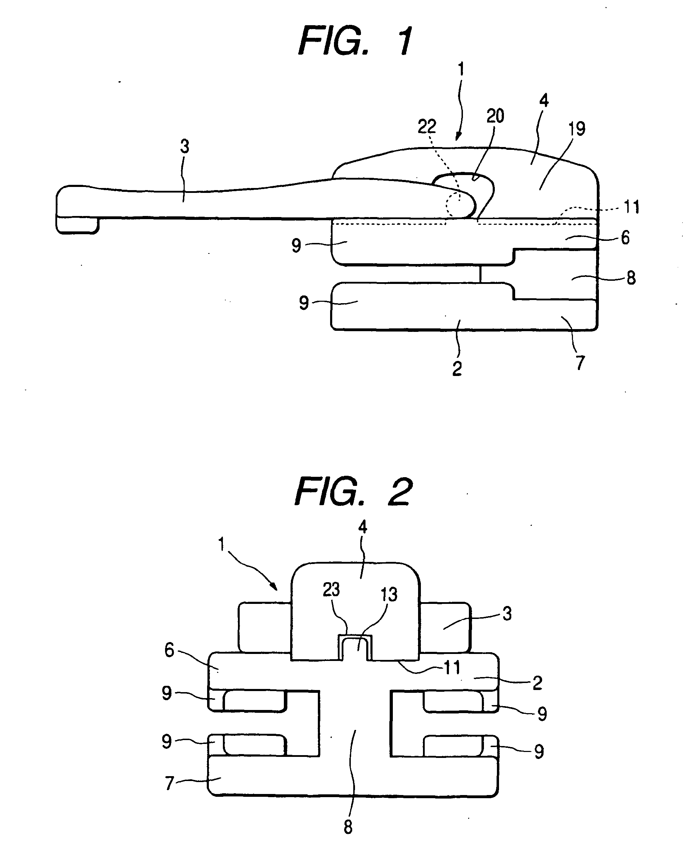

The slider for a slide fastener according to the invention is constituted by three members including a body 2, a pull tab 3 and a cover 4 for pull tab attachment as shown in Figs. 1 to 6, and at least the body 2 and the cover 4 for pull tab attachment are formed by injection molding using a thermoplastic resin such as polybutylene terephthalate, polyamide, polyacetal or polypropylene, and the pull tab 3 is mounted on the formed body 2 in a pivotal support configuration and the cover 4 is provided thereon and is welded to the upper surface of the body 2 so that a slider 1 is fabricated.

The body 2 of the slider 1 couples an upper plate 6 and a lower plate 7 through a guide column 8, and flanges 9 for guiding a fastener element are provided on both side edges of the upper plate 6 and the lower plate 7. The flange 9 is provided on only one of the upper plate 6 and the lower plate 7 depending on the configuration of the fastener element in some cases. An attachment column 10 is erected longitudinally on the upper surface of the upper plate 6, and the stopping mechanism of the slider 1 is provided on the attachment column 10 according to circumstances so that a slider having an automatic or semiautomatic stopper can be finished.

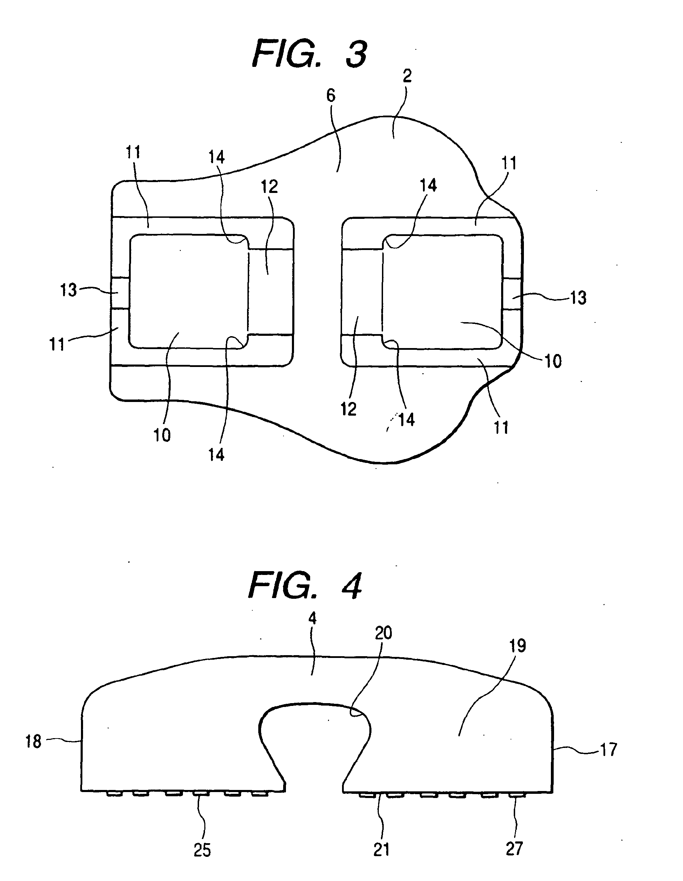

As shown in Fig. 3, the attachment column 10 erected on the upper plate 6 of the body 2 is separately provided on a forward part of the body 2 (that is, the shoulder side) and a rear part (that is, the rear side), and the opposed surfaces of the front and rear attachment columns 10 are formed on slant face portions 12 respectively and perform an auxiliary duty for guiding a pivot 22 of the pull tab 3 together with a bearing portion 20 of the cover 4. A concave fitting grooves 11 capable of fitting the cover 4 for pull tab attachment are provided in the forward part of the attachment column 10 on the shoulder side and base portions on both sides, and the rear part of the attachment column 10 on the rear side and base portions on both sides, respectively.

The fitting groove 11 is concaved to take such a shape as to reach a slightly inner center from both a corner portion 14 in the rear part of the attachment column 10 on the shoulder side and the corner portion 14 in the forward part of the attachment column 10 on the rear side, and is formed to precisely hold the bearing portion 20 having a great thickness which is formed in the central part of the cover 4. Furthermore, a projection 13 is provided in the central part of the fitting groove 11 formed laterally on the front and rear ends of the body 2 in order to prevent the cover 4 from being shifted to the left and right of the body 2 when the cover 4 is fitted, and is formed to be fitted in a concave portion 23 provided on a front wall 17 and a rear wall 18 in the cover 4.

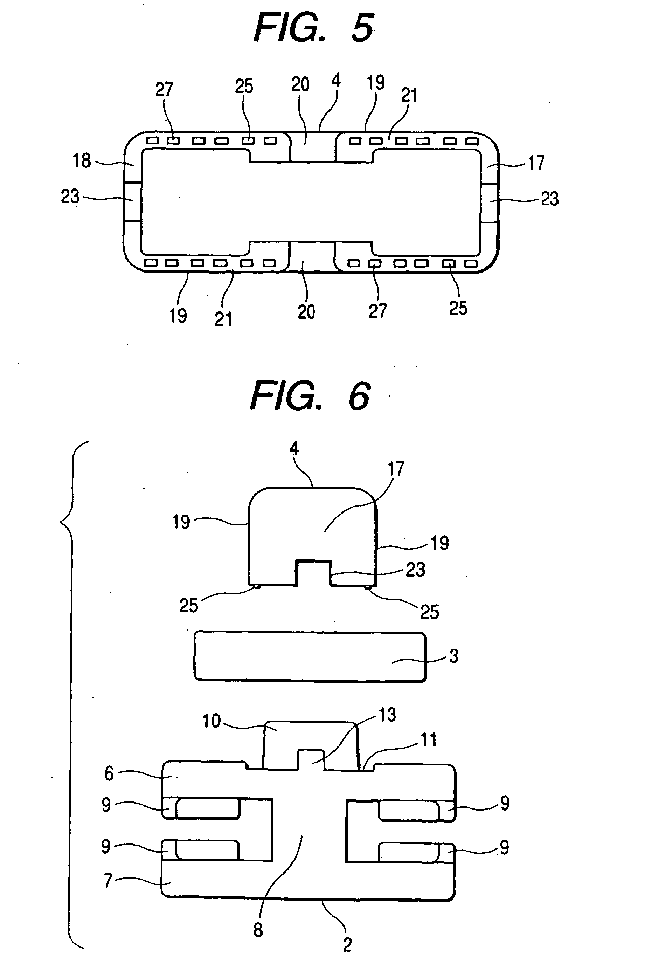

As shown in Figs. 4 and 5, the cover 4 for covering the attachment column 10 of the body 2 is wholly formed by a bilge-shaped box, the front wall 17, the rear wall 18 and a side wall 19 are provided on a forward part, a rear part and both sides over the periphery of the cover 4 respectively, and the concave bearing portion 20 capable of inserting the pivot 22 of the pull tab 3 therethrough is provided on the center of the side walls 19 at both sides, and front and rear lower end faces 21 of the bearing portion 20 are formed to have great thicknesses and to be fitted in the corner portions 14 of the body 2. Moreover, the inverted U-shaped concave portions 23 are provided in the central parts of the lower end faces 21 in the front wall 17 and the rear wall 18 to fit the projections 13 provided on the front and rear ends of the body 2, thereby precisely holding the cover 4.

As shown in Fig. 5, a plurality of welding projections 25 of a rectangular parallelepiped 27 for welding the cover 4 to the body 2 is provided at a predetermined interval in a longitudinal line in a part of the surfaces of the lower end faces 21 in the left and right side walls 19 of the cover 4, and the cover 4 is fitted in the fitting groove 11 provided on the body 2 so that the body 2 and the cover 4 can easily be welded to each other.

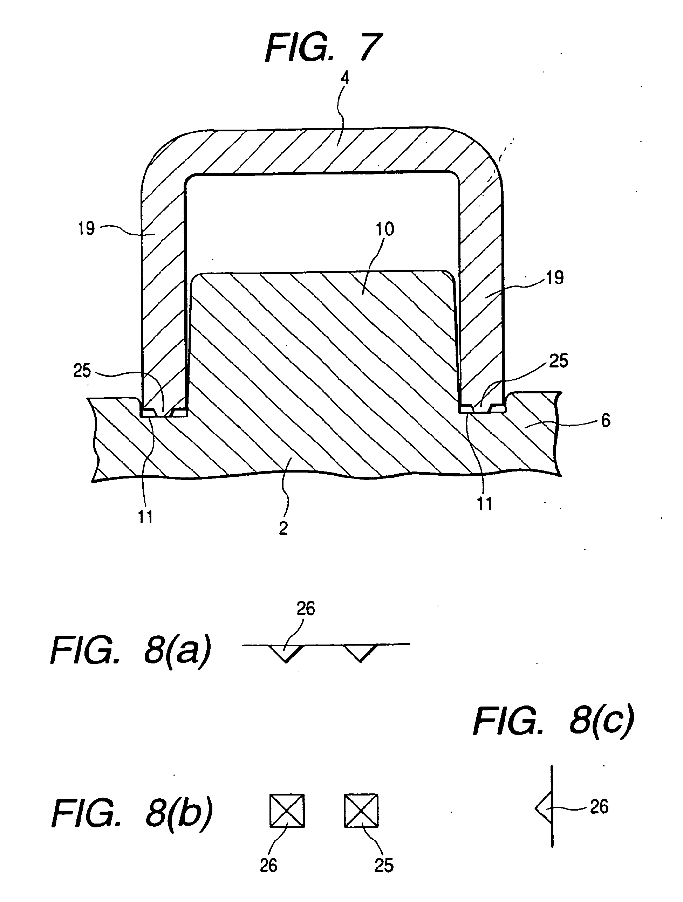

In the assembly of the slider, the pivot 22 of the pull tab 3 is mounted between the attachment columns 10 provided on the upper surface of the body 2, the attachment column 10 is then covered by the cover 4 and the lower end face 21 of the cover 4 is thus fitted and held in the fitting groove 11 of the body 2 as shown in Fig. 7, and thereafter, the welding projection 25 is fused and welded to the bottom portion of the fitting groove 11 by ultrasonic processing. In this case, the welding projection 25 is not provided over the whole surface of the lower end face 21 of the cover 4 so that a gap is present around the welding projection 25. Consequently, a fused resin is filled in the fitting groove 11 and is solidified, and does not overflow from the fitting groove 11 to the surface of the body 2. For this reason, the beauty of the slider 1 can be prevented from being spoiled, and furthermore, the fused resin can be prevented from overflowing to the surface of the body 2 to be solidified, thereby forming a lump differently from a conventional product.

For the slider 1 according to an embodiment of the invention, as shown in an exploded view of Fig. 6, the fitting groove 11 to be formed around the attachment column 10 in the upper plate 6 of the body 2 has a depth of approximately 0.5 mm and a width which is equal to the width of the lower end face 21 of the cover 4 and the welding projection 25 to be formed on the lower end face 21 of the cover 4 has a height of approximately 0.2 mm and a width which is almost half of the width of the lower end face 21, and they are welded by the ultrasonic processing. A dimension is varied depending on the size of the slider 1.

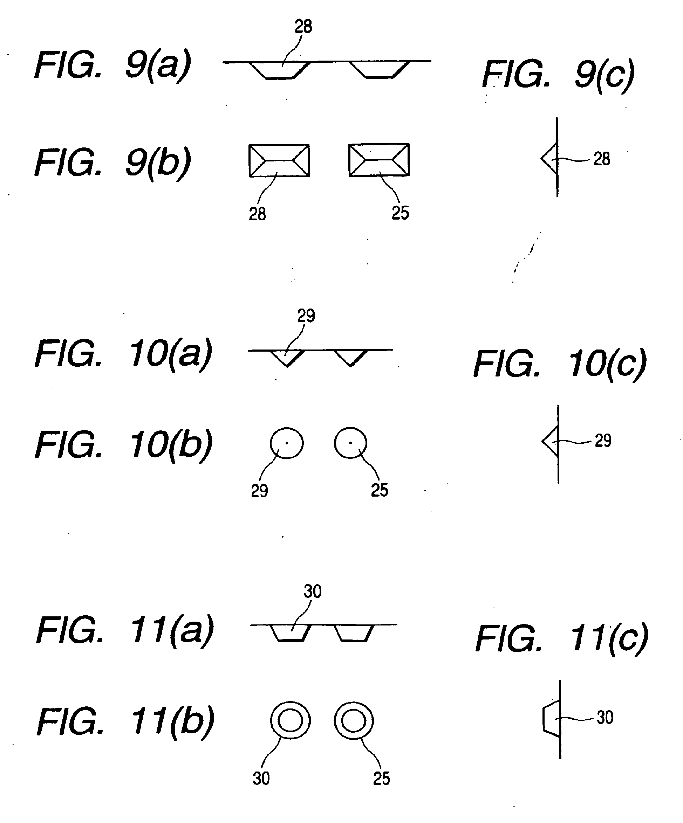

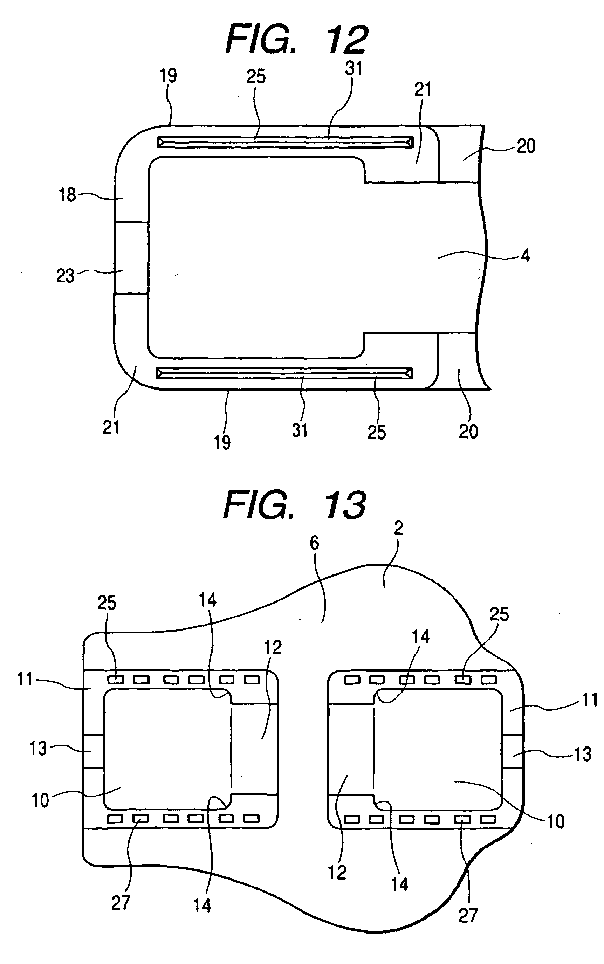

The shape of the welding projection 25 protrudingly provided at a predetermined interval from the lower end face 21 of the cover 4 may be the rectangular parallelepiped 27 having a square section shown in Fig. 5, a pyramid 26 having a triangular section shown in Figs. 8(a), 8(b) and 8(c), a hipped member 28 having a triangular section shown in Figs. 9(a), 9(b) and 9(c), a cone 29 having a triangular section shown in Figs. 10(a), 10(b) and 10(c) or a truncated cone 30 having a square section shown in Figs. 11(a), 11(b) and 11(c). As shown in Fig. 12, moreover, one or two projections 21 having a triangular or square section may be provided over almost the whole length of the lower end face 21 of the cover 4. The welding projection 25 may have other shapes. For example, the welding projection 25 may be formed by a prism or a cylinder which has a square section.

The welding projections 25 having various configurations do not need to be provided on only the lower end face 21 of the cover 4 but may be provided on a surface in the fitting groove 11 formed on the upper plate 6 of the body 2. For example, as shown in Fig. 13, the welding projection 25 is provided at a predetermined interval on the surface in the fitting grooves 11 formed on both sides of the attachment column 10 or one projection having a gap formed on both sides may be provided, and may be caused to come in contact with the flat lower end face 21 of the cover 4 by pressure and may be thus welded by the ultrasonic processing.

The slider for a slide fastener according to the invention has the structure described above and produces the following effects by such a structure.

According to the first aspect of the invention, a slider for a slide fastener has a body of the slider and a cover for pull tab attachment which is provided on an upper surface of the body, wherein a fitting groove for accommodating a lower end face of the cover is provided on the upper surface of the body, a welding projection is protruded from a part of a surface of the lower end face or a bottom face of the fitting groove, and the body and the cover are welded integrally. Consequently, the lower end face of the cover and the bottom face of the fitting groove of the body do not wholly come in contact with each other but come in contact with each other by the welding projection having a gap therearound. Therefore, it is possible to obtain a slider in which excessive fusion can be prevented, a fused material does not overflow from the fitting groove and beauty can be enhanced. Furthermore, there is no solidified lump obtained by overflowing from the fitting groove as in a conventional product. Thus, it is possible to produce an effect that the normal fall-down operation of a pull tab can be carried out.

According to the second aspect of the invention, in addition to the effect of the first aspect of the invention, a plurality of welding projections is formed to be protruded at a predetermined interval. Consequently, a fused material flows into the welding projections provided at the predetermined interval and is filled therein. Thus, it is possible to obtain an advantage that the fused material can be effectively prevented from overflowing from the fitting groove.

According to the third aspect of the invention, in addition to the effect of the first aspect of the invention, the welding projection is formed to be continuously protruded. Consequently, the fused material flows into a gap portion formed on both sides of the welding projection and is filled therein. Thus, it is possible to obtain an advantage that the fused material can be effectively prevented from overflowing from the fitting groove.

According to the fourth aspect of the invention, in addition to the effect of the first, second or third aspect of the invention, the welding projection is provided on the lower end face of a side wall of the cover or the bottom face of the fitting groove of the body which is opposed to the lower end face of the side wall of the cover. Consequently, the welding is carried out in a longitudinal direction, that is, a lengthwise direction of the body. Therefore, it is possible to produce an advantage that an effective welding strength can be obtained and a bad effect of causing the fused material to overflow to the front and rear faces of the body can be prevented.

According to the fifth aspect of the invention, in addition to the effect of the first, second or third aspect of the invention, the welding projection is formed to take a square cross section. Consequently, the amount of a material for forming the welding projection can be increased and the welding strength of the body and the cover can be enhanced. Thus, it is possible to produce an advantage that the invention is suitable for the fabrication of a large-sized slider requiring a great welding strength.

According to the sixth aspect of the invention, in addition to the effect of the first, second or third aspect of the invention, the welding projection is formed to take a triangular cross section. Consequently, the amount of the material for forming the welding projection is reduced and the fused material can be prevented from overflowing from the fitting groove. In addition, it is possible to produce an advantage that the invention is suitable for the fabrication of a small-sized slider which does not require a great welding strength. Thus, the advantage produced by the invention is very remarkable.

## Claims

1. A slider for a slide fastener, comprising:
a body (2) of a slider (1); and
a cover (4) for pull tab attachment which is provided on an upper surface of the body (2),
wherein a fitting groove (11) for accommodating a lower end face (21) of the cover (4) is provided on the upper surface of the body (2), and the body (2) and the cover (4) are welded integrally,
**characterized in that** a welding projection (25) is protruded from a part of one of a surface,of the lower end face (21) and a bottom face of the fitting groove (11).

2. The slider for a slide fastener according to claim 1, wherein a plurality of welding projections (25) is formed to be protruded at a predetermined interval.

3. The slider for a slide fastener according to claim 1, wherein the welding projection (25) is formed to be continuously protruded.

4. The slider for a slide fastener according to claim 1, 2 or 3, wherein the welding projection (25) is provided on one of the lower end face (21) of a side wall (19) of the cover (4) and the bottom face of the fitting groove (11) of the body (2) which is opposed to the lower end face (21) of the side wall (19) of the cover (4).

5. The slider for a slide fastener according to claim 1, 2 or 3, wherein the welding projection (25) is formed to take a square cross section.

6. The slider for a slide fastener according to claim 1, 2 or 3, wherein the welding projection (25) is formed to take a triangular cross section.

7. The slider for a slide fastener according to claim 1, 2 or 3, further comprising a pull tab (3) mounted on the formed body (2) in a pivotal support configuration.

8. The slider for a slide fastener according to claim 1, 2 or 3, wherein the welding projection (25) is fused in order to integrally weld the body (2) and the cover (4).

## Patentansprüche

1. Ein Schieber für einen Reißverschluss, umfassend:
einen Körper (2) eines Schiebers (1); und
eine Abdeckung (4) für die Zugschleife, die sich an einer oberen Oberfläche des Körpers (2) befindet,
wobei sich auf der Oberfläche des Körpers (2) eine Passnut (11) zum Aufnehmen einer Auflagefläche (21) der Abdeckung (4) befindet und der Körper (2) und die Abdeckung (4) in einem Stück geschweißt sind,
**dadurch gekennzeichnet, dass** ein Schweißbuckel (25) von einem Teil einer Fläche der Auflagefläche (21) oder einer Bodenfläche der Passnut (11) vorsteht.

2. Der Schieber für einen Reißverschluss nach Anspruch 1, wobei eine Vielzahl von Schweißbuckeln (25) so geformt ist, dass sie in einem vorher festgelegten Intervall vorsteht.

3. Der Schieber für einen Reißverschluss nach Anspruch 1, wobei eine Vielzahl von Schweißbuckeln (25) so geformt ist, dass sie durchgehend vorsteht.

4. Der Schieber für einen Reißverschluss nach Anspruch 1, 2 oder 3, wobei sich der Schweißbuckel (25) an einer Auflagefläche (21) einer Seitenwand (19) der Abdeckung (4) oder der Bodenfläche der Passnut (11) des Körpers (2) befindet, die der Auflagefläche (21) der Seitenwand (19) der Abdeckung (4) gegenüberliegt.

5. Der Schieber für einen Reißverschluss nach Anspruch 1, 2 oder 3, wobei der Schweißbuckel (25) so geformt ist, dass er einen rechteckigen Querschnitt hat.

6. Der Schieber für einen Reißverschluss nach Anspruch 1, 2 oder 3, wobei der Schweißbuckel (25) so geformt ist, dass er einen dreieckigen Querschnitt hat.

7. Der Schieber für einen Reißverschluss nach Anspruch 1, 2 oder 3, weiterhin umfassend eine Zugschleife (3), die in einer Halterung schwenkbar am Körper (2) befestigt ist.

8. Der Schieber für einen Reißverschluss nach Anspruch 1, 2 oder 3, wobei der Schweißbuckel (25) geschmolzen wird, um den Körper (2) und die Abdeckung (4) miteinander zu verschweißen.

## Revendications

1. Curseur pour fermeture à glissière, comprenant :
un corps (2) de curseur (1) et
un capot (4) destiné à la fixation d'une tirette qui est monté sur la surface supérieure du corps (2),
dans lequel une gorge de montage (11) destinée à loger une face d'extrémité inférieure (21) du capot (4) est ménagée sur la surface supérieure du corps (2), et le corps (2) et le capot (4) sont soudés en formant une pièce d'un seul tenant,
**caractérisé en ce qu'**une saillie de soudage (25) fait saillie depuis une partie, soit d'une surface de la face d'extrémité inférieure (21) soit d'une face du fond de la gorge de montage (11).

2. Curseur pour fermeture à glissière selon la revendication 1, dans lequel une pluralité de saillies de soudage (25) sont formées de manière à faire saillie à intervalles prédéterminés.

3. Curseur pour fermeture à glissière selon la revendication 1, dans lequel la saillie de soudage (25) est formée de manière à faire saillie de façon continue.

4. Curseur pour fermeture à glissière selon la revendication 1, 2 ou 3, dans lequel la saillie de soudage (25) est ménagée soit sur la face d'extrémité inférieure (21) d'une paroi latérale (19) du capot (4) soit sur la face du fond de la gorge de montage (11) du corps (2) qui fait face à la face d'extrémité inférieure (21) de la paroi latérale (19) du capot (4).

5. Curseur pour fermeture à glissière selon la revendication 1, 2 ou 3, dans lequel la saillie de soudage (25) a une section de forme carrée.

6. Curseur pour fermeture à glissière selon la revendication 1, 2 ou 3, dans lequel la saillie de soudage (25) a une section de forme triangulaire.

7. Curseur pour fermeture à glissière selon la revendication 1, 2 ou 3 comprenant en outre une tirette (3) montée à pivotement sur le corps formé (2), selon une configuration de support de pivotement.

8. Curseur pour fermeture à glissière selon la revendication 1, 2 ou 3, dans lequel la saillie de soudage (25) est fondue afin de souder le corps (2) et le capot (4) en formant une pièce d'un seul tenant.
